# EUROPÄISCHE PATENTSCHRIFT

(11) **EP 0 937 624 B1**
(45) Veröffentlichungstag und Bekanntmachung des Hinweises auf die Patenterteilung: **17.08.2005**
(21) Anmeldenummer: 98123437.0
(22) Anmeldetag: 09.12.1998
(51) Int. Cl.: B60T 15/04, B60T 7/04, B60T 7/06, B60T 13/68

(54) **Anordnung mit einer Ventileinrichtung**
Arrangement with a valve device
Aménagement avec un dispositif de valve

(30) Priorität: 19.02.1998 DE 19806936
(43) Veröffentlichungstag der Anmeldung: 25.08.1999
(73) Patentinhaber: WABCO GmbH & Co. OHG, 30453 Hannover (DE)
(72) Erfinder: Feldmann, Joachim, 31535 Neustadt (DE)
(74) Vertreter: Schrödter, Manfred, Dipl.-Ing.

(56) Entgegenhaltungen:
- DE-A- 2 328 735
- GB-A- 664 530
- US-A- 2 812 218
- US-A- 4 926 907

## Beschreibung

Die Erfindung betrifft eine Anordnung mit einer Ventileinrichtung und einem Bedienungsorgan nach dem Oberbegriff des Patentanspruchs 1.

Aus der DE 23 28 735 A und auch aus der WABCO Westinghouse-Druckschrift "Motorwagen-Bremsventil 461 106 Blatt 1", Ausgabe August 1973 ist eine Anordnung mit einer Ventileinrichtung bekannt, bei welcher ein Pedal als Bedienungsorgan dient. In dieser ist die als Elastomerfeder ausgebildete Regelfeder zwischen dem Abstufungskolben und dem Stößel angeordnet. Des weiteren sind in dieser Ventileinrichtung der Auslaßventilsitz an dem Abstufungskolben und der Einlaßventilsitz am Gehäuse der Ventileinrichtung angeordnet. Daraus folgt, dass beim Betätigen dieser Anordnung der von der Ventileinrichtung gelieferte Druck eine Kraft, die nachstehend als Druckkraft bezeichnet wird, über den Stößel auf das Bedienungsorgan hervorruft. Zwecks Aufrechterhaltung der Betätigung muß der Bediener dieser Druckkraft (und vernachlässigbaren Feder-Rückstellkräften) eine Betätigungskraft entgegensetzen, deren Größe außer von der Druckkraft von den Hebelverhältnissen zwischen Bedienungsorgan und Ventileinrichtung abhängt.Das bedeutet, dass bei gegebenen Hebelverhältnissen die Betätigungsskraft eine Funktion des gelieferten Druckes ist. Der Verlauf der Betätigungskraft als Funktion des gelieferten Druckes soll hier "Betätigungskraftbedarf" genannt werden.

Nun gibt es Einsatzfälle, die eine Änderung dieser Hebelverhältnisse, beispielsweise durch Änderung der Länge des Bedienungsorgans, dabei jedoch die Aufrechterhaltung des Betätigungskraftbedarfs, erfordern. Andererseits gibt es Einsatzfälle, die eine Änderung des Betätigungskraftbedarfs bei unveränderten Hebelverhältnissen erfordern. Solche Einsatzfälle treten insbesondere auf, wenn das Bedienungsorgan von der Ventileinrichtung getrennt angeordnet ist, wie es beispielsweise in der WABCO Westinghouse-Druckschrift "Motorwagen-Bremsventil 461 295", Ausgabe August 1973, vorgesehen ist. Eine Anpassung an solche Fälle ist nicht ohne Änderung des Durchmessers des Abstufungskolbens und damit zusammenhängender weiterer Änderungen der Ventileinrichtung möglich. Diese Änderungen, die auf eine Umkonstruktion der Ventileinrichtung hinauslaufen, sind mit einem erheblichen Entwicklungsaufwand verbunden. Außerdem verursachen sie wegen der dadurch bedingten größeren Variantenzahl u. a. höhere Fertigungs-, Material- und Lagerhaltungskosten.

Aus der US-A-2 812 218 ist eine Anordnung mit einer Ventileinrichtung und einem als Pedal ausgebildeten Bedienungsorgan bekannt. Die Ventileinrichtung weist einen Abstufungskolben auf, der eine mit einem Verbraucher verbundene Arbeitskammer begrenzt. Der Abstufungskolben wird von einer Regelfeder in Richtung auf die Arbeitskammer zu belastet. Zum Belüften und Entlüften der Arbeitskammer dient ein kombiniertes Einlaß- und Auslaßventil, über welches die Arbeitskammer wahlweise mit einer Vorratskammer für Druckmittel oder mit einer Druckentlastungskammer, die mit einem Druckentlastungsanschluß in Verbindung steht, verbindbar ist. Die Vorratskammer wird von einem im Abstufungskolben angeordneten Hohlraum gebildet. Zum Betätigen des kombinierten Einlaß- und Auslaßventils ist das Pedal vorgesehen, welches über einen hohlen Stößel mit dem kombinierten Einlaß- und Auslaßventil in Wirkverbindung steht. Das kombinierte Einlaß- und Auslaßventil besteht aus einem Einlaßventilsitz mit Einlaßventilkörper und einem Auslaßventilsitz mit Auslaßventilkörper. Der Einlaßventilsitz ist am Abstufungskolben angeordnet. Der Auslaßventilsitz wird von dem dem Abstufungskolben zugewandten Ende des Stößels gebildet. Der Einlaßventilkörper und der Auslaßventilkörper sind über ein Distanzstück fest miteinander verbunden. Der Einlaßventilkörper ist innerhalb der Vorratskammer im Abstufungskolben gelegen und wird mittels einer Feder auf dem Einlaßventilsitz gehalten. Über ein rohrförmiges Teil, welches sich abgedichtet durch eine Durchgangsöffnung im Abstufungskolben hindurch in die Vorratskammer hineinerstreckt, ist die Vorratskammer mit einem Vorratsanschluß der Ventileinrichtung verbunden.

Der hohle Stößel, welcher einerseits als Kraftübertragungsglied und andererseits als Auslaßventilsitz dient, erstreckt sich, ausgehend vom Auslaßventilkörper, durch die Druckentlastungskammer und eine Durchgangsöffnung in einem die Druckentlastungskammer begrenzenden Deckel hindurch in Richtung auf das Pedal zu. In der Wand des hohlen Stößels sind mehrere Durchgangsöffnungen angeordnet, über welche der Hohlraum des Stößels mit der Druckentlastungskammer verbunden ist. In der Druckentlastungskammer ist eine Feder angeordnet, die sich mit ihrem einen Ende an einer die Druclcentlastungskammer begrenzenden Wand im Gehäuse der Ventileinrichtung abstützt und mit ihrem anderen Ende den Stößel in Richtung auf das Pedal zu beaufschlagt. Die Feder dient zum Zurückstellen des Auslaßventils und des Pedals in ihre Grundstellung. Denkbar ist es, die Feder auch zum Erzeugen eines Betätigungskraftbedarfs zu nutzen.

Wird eine Anpassung des Betätigungskraftbedarfs an verschiedene Bedarfsfälle gewünscht, so ist dies durch Austauschen der als Rückstellkraft dienenden Feder möglich. Bei einer Ventileinrichtung mit im Gehäuse angeordneter Feder ist der Austausch der Feder jedoch relativ aufwendig. Die Ventileinrichtung muß aus dem Fahrzeug ausgebaut und das Gehäuse der Ventileinrichtung muß geöffnet werden. Zudem müssen Teile der Ventileinrichtung, wie z.B. der Stößel mit Ventilsitz, zwecks Montage der Feder aus der Ventileinrichtung herausgenommen werden.

Der Erfindung liegt die Aufgabe zugrunde, eine Anordnung der vorstehend genannten Art mit einfachen Mitteln so auszubilden, daß sie ohne oder mit geringen Änderungen der Ventileinrichtung eine Anpassung an verschiedene Einsatzfälle ermöglicht.

Diese Aufgabe wird durch die in dem Patentanspruch 1 angegebene Erfindung gelöst. Vorteilhafte Ausgestaltungen und Fortbildungen sind in den Unteransprüchen angegeben.

Anordnungen der eingangs genannten Art sind auf allen technischen Gebieten gebräuchlich, in denen druckbetätigte Steueranlagen, insbesondere mit gasförmigen Druckmitteln arbeitende Steueranlagen, zum Einsatz kommen. Als gasförmiges Druckmittel kommt insbesondere Druckluft in Betracht. In einem solchen Fall mündet der Druckentlastungsausgang für gewöhnlich in die Atmosphäre. Im Falle eines anderen gasförmigen Druckmittels ist der Druckentlastungsausgang in der Regel mit einem unter Atmosphärendruck stehenden Sammelbehälter verbunden.

Ein wichtiges Anwendungsgebiet der Erfindung stellen durch Druckluft betätigte Fahrzeug-Bremsanlagen dar.

Die Erfindung wird nunmehr anhand zeichnerisch dargestellter Ausführungsbeispiele erläutert. Unter durchgehender Verwendung gleicher Bezugszeichen für funktionsgleiche Bauteile zeigen
- Fig. 1: schematisch eine Anordnung mit einer Ventileinrichtung,
- Fig. 2: schematisch eine andere Anordnung mit einer Ventileinrichtung.

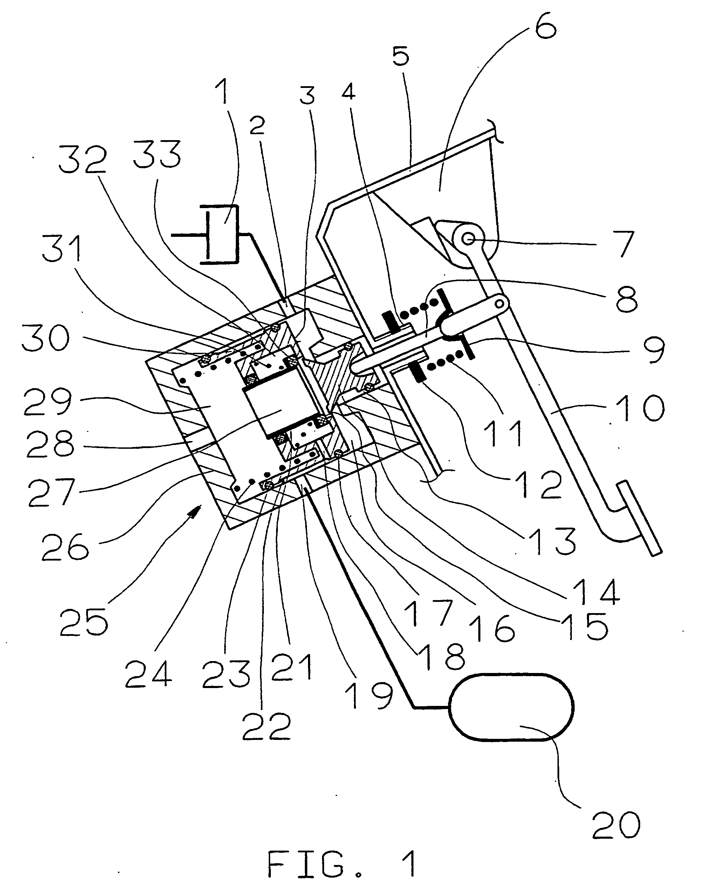

In der in Fig. 1 dargestellten Anordnung sind eine Ventileinrichtung (25) und ein als Pedal dargestelltes, aber auch in anderer Ausbildung mögliches, Bedienungsorgan (10) auf geeignete und geläufige Arten an einem Lagerteil (5, 6) gelagert. Die Lagerung der Ventileinrichtung (25) ist fest, während die Lagerung des Bedienungsorgans (10) auf einer Lagerwelle (7) drehbar ausgebildet ist. Anstelle der Lagerwelle (7) kann auch eine Lagerachse vorgesehen sein. Zur Aufnahme der Lagerwelle (7) weist das Lagerteil (5, 6) einen Lagerbock (6) auf, an dem auch ein nicht näher bezeichneter Anschlag zur Festlegung der Ruhestellung des Bedienungsorgans (10) ausgebildet ist. In der Fahrzeugtechnik dient üblicherweise ein Boden- oder Stirnwandteil des Fahrerhauses als Lagerteil (5, 6).

Die Ventileinrichtung (25) besitzt ein Gehäuse (26) mit einem Vorratsanschluß (19), einem Arbeitsanschluß (2) und einem Druckentlastungsausgang (28). Der Vorratsanschluß (19) ist mit einem Druckvorrat (20) verbunden, der Arbeitsanschluß (2) ist mit einem Verbraucher (1) verbunden. Der als Zylinder angedeutete Verbraucher (1) kann auch für mehrere Verbraucher stehen. Der Druckentlastungsausgang (28) mündet in die Atmosphäre, das Ausführungsbeispiel ist also für den Betrieb mit Druckluft ausgelegt.

In dem Gehäuse (26) ist längsverschiebbar ein Abstufungskolben (30) geführt. Der Abstufungskolben (30) weist auf seiner Längserstreckung im Abstand zueinander zwei umlaufende Dichtelemente (17, 23) auf. Die Dichtelemente (17, 23) sind so angeordnet, und ihr Abstand ist so bemessen, daß in jeder, bei einer Betätigung möglichen, Stellung des Abstufungskolbens (30) die gehäuseinnere Mündung des Vorratsanschlusses (19) sich zwischen den Dichtelementen (17, 23) befindet. Dadurch entsteht zwischen den Dichtelementen (17, 23) sowie den dazwischenliegenden Wänden des Abstufungskolbens (30) und des Gehäuses (26) eine erste Teil-Vorratskammer (22).

Der Abstufungskolben (30) ist hohl. Sein Hohlraum ist über einen Durchlaß (18), der auch für mehrere Durchlässe stehen kann, mit der ersten Teil-Vorratskammer (22) verbunden und bildet eine zweite Teil-Vorratskammer (32). Beide Teil-Vorratskammern (22 und 32) zusammen bilden eine Vorratskammer (22, 32).

Das dem Bedienungsorgan (10) zugewandte Dichtelement (17) des Abstufungskolbens (30) trennt in dem Gehäuse (26) die Vorratskammer (22, 32) insbesondere die erste Teil-Vorratskammer (22), von einer mit dem Arbeitsanschluß (2) verbundenen Arbeitskammer (16). Die dieser Arbeitskammer (16) zugewandte Stirnfläche des Abstufungskolbens (30) ist stets mit dem Druck in der Arbeitskammer (16) beaufschlagt und ist die Wirkfläche (3) des Abstufungskolbens (30). Von der Wirkfläche (3) zu der zweiten Teil-Vorratskammer (32) hin weist der Abstufungskolben (30) einen nicht näher bezeichneten Durchbruch auf. Innerhalb der zweiten Teil-Vorratskammer (32) ist an dem Abstufungskolben (30) um diesen Durchbruch herum ein Einlaßventilsitz (33) ausgebildet.

Entgegen der Wirkrichtung des Drucks auf der Wirkfläche (3) ist der Abstufungskolben (30) mit der Kraft einer Regelfeder (24) beaufschlagt. Die Regelfeder (24) ist im Ausführungsbeispiel zwischen einem der Wirkfläche (3) abgewandten Bereich des Abstufungskolbens (30) und einer die Druckentlastungskammer (29) begrenzenden Gehäusewand innerhalb der Druckentlastungskammer (29) angeordnet. Die Regelfeder (24) kann auch auf jede andere zweckdienliche Art eingebaut sein.

Das andere Dichtelement (23) des Abstufungskolbens (30) trennt die Vorratskammer (22, 32), insbesondere die erste Teil-Vorratskammer (22), von einer mit dem Druckkentlastungsausgang (28) verbundenen Druckentlastungskammer (29).

An seinem der Druckentlastungskammer (29) und damit dem Druckentlastungsausgang (28) zugewandten Ende weist der Abstufungskolben (30) einen nicht näher bezeichneten Durchbruch auf. Ein Ventilglied (21) durchdringt von dem Einlaßventilsitz (33) her die in dem Hohlraum des Abstufungskolbens (30) befindliche zweite Teil-Vorratskammer (32) und den Durchbruch. Das Ventilglied (21) weist einen einerseits innerhalb des Einlaßventilsitzes (33) des Abstufungskolbens (30) und andererseits in die Druckentlastungskammer (29) mündenden Durchgang auf, der als Druckentlastungskanal (27) bezeichnet werden soll. Das Ventilglied (21) ist gegenüber dem Abstufungskolben (30) in dessen Durchbruch abgedichtet verschiebbar geführt. Es trennt dadurch die Druckentlastungskammer (29) von der zweiten Teil-Vorratskammer (32) und damit von der Vorratskammer (22, 32).

Die Verschiebbarkeit des Ventilglieds (21) gegenüber dem Abstufungskolben (30) in Richtung der Arbeitskammer (16) wird durch Anschlagen des Ventilglieds (21) an den an dem Abstufungskolben (30) ausgebildeten umlaufenden Einlaßventilsitz (33) begrenzt. Der Einlaßventilsitz (33) bildet mit einer komplementär ausgebildeten Fläche oder Linie des Ventilglieds (21) ein Einlaßventil (21, 33). Dieses beherrscht die Verbindung zwischen der Vorratskammer (22, 32), insbesondere der zweiten Teil-Vorratskammer (32), und der Arbeitskammer (16).

Zwischen dem Ventilglied (21) und einer Innenwand der zweiten Teil-Vorratskammer (32) ist eine Schließfeder (31) gefangen. Diese spannt das Ventilglied (21) in Richtung des Einlaßventilsitzes (33) und damit in Schließrichtung des Einlaßventils (21, 33) vor. Die Schließfeder (31) unterstützt das sichere Schließen des Einlaßventils (21, 33), insbesondere bei geringem Vorratsdruck.

In die Arbeitskammer (16) dringt von dem dem Bedienungsorgan (10) zugewandten Ende des Gehäuses (26) her ein Stößel (14) ein. Dieser ist in dem Gehäuse (26) abgedichtet auf das Ventilglied (21) zu und in Gegenrichtung verschiebbar geführt. An seinem dem Abstufungskolben (30) zugewandten Ende ist der Stößel (14) so bemessen, daß er den von dem Einlaßventilsitz (33) eingefaßten Durchbruch des Abstufungskolbens (30) zwischen der Wirkfläche (3) und der zweiten Teil-Vorratskammer (32) durchdringen kann. An diesem Ende des Stößels (14) ist ein umlaufender Auslaßventilsitz (15) angeordnet. Dieser ist so bemessen, daß er die ihm zugewandte Mündung des das Ventilglied (21) durchdringenden Druckentlastungskanals (27) einfaßt. Der Auslaßventilsitz (15) bildet mit einer komplementär ausgebildeten Fläche oder Linie des Ventilglieds (21) ein Auslaßventil (15, 21). Dieses beherrscht die Verbindung zwischen der Arbeitskammer (16) und, über den Druckentlastungskanal (27) sowie über die Druckentlastungskammer (28), dem Drukkentlastungsausgang (28) und damit der Atmosphäre.

Zwischen dem Stößel (14) und dem Bedienungsorgan (10) ist ein Übertragungsglied (8) angeordnet. Dieses steht auf bekannte Arten mit dem Stößel (14) und dem Bedienungsorgan (10) so in Wirkverbindung, daß es einen durch eine Drehung des Bedienungsorgans (10) auf die Ventileinrichtung (25) hervorgerufenen Hub auf den Stößel (21) übertragen kann. Ein Hub in dieser Richtung entspricht der Schließrichtung des Auslaßventils (15, 21), die zugleich Öffnungsrichtung des Einlaßventils (21, 33) ist. Eine Wirkverbindung in Gegenrichtung ist ebenfalls möglich.

Eine Feder (11), die das Bedienungsorgan (10) in Richtung seiner Ruhestellung vorspannt, stellt die erfindungsgemäße Ausgestaltung der bisher beschriebenen Grundausführung dar, auf die später eingegangen wird.

Die Fig. zeigt die Anordnung im Ruhezustand. In diesem Zustand nehmen der Stößel (14) und der Abstufungskolben (30) mit dem Ventilglied (21) Stellungen ein, in denen der Auslaßventilsitz (15) um einen Öffnungshub des Auslaßventils (15, 21) von dem Ventilglied (21) abgehoben ist. Dadurch sind das Auslaßventil (15, 21) geöffnet und die Arbeitskammer (16) sowie der Verbraucher (1) über den Druckentlastungskanal (27), die Druckentlastungskammer (29) und den Druckentlastungsausgang (28) mit der Atmosphäre verbunden.

Zum sicheren Offenhalten des Auslaßventils (15, 21) können in bekannter Weise eine oder mehrere Rückholfedern an dem Stößel (14) und/oder an dem Bedienungsorgan (10) vorgesehen sein.

Der Bediener betätigt die Anordnung durch eine Drehung des Bedienungsorgans (10) auf die Ventileinrichtung (25) zu. Nach Zurücklegen eines etwa zwischen dem Bedienungsorgan (10), dem Übertragungsglied (8) und/oder dem Stößel (14) bestehenden Spiels überträgt das Übertragungsglied (8) den der weiteren Drehung des Betätigungsorgans (10) entsprechenden Hub auf den Stößel (14). Bei diesem Hub setzt der Auslaßventilsitz (15) nach Zurücklegen des Öffnungshubs des Auslaßventils (15, 21) auf das Ventilglied (21) auf und schließt dadurch das Auslaßventil (15, 21). Im weiteren Verlauf des Hubs hebt der Stößel (14) das Ventilglied (21) gegen die Kraft der Schließfeder (31) und/oder gegen eine etwaige Kraft des Vorratsdrucks auf das Ventilglied (21) von dem Einlaßventilsitz (33) ab und öffnet dadurch das Einlaßventil (21, 33). Eine Kraft des Vorratsdrucks auf das Ventilglied (21) tritt auf, wenn die von dem Einlaßventilsitz (33) und der Abdichtung des Ventilglieds (21) in dem Durchbruch des Abstufungskolbens (30) eingeschlossenen Flächen unterschiedlich groß sind. In der Regel wird eine solche Kraft aber durch entsprechende Bemessung dieser Flächen vermieden.

Bei geöffnetem Einlaßventil (21, 33) kann nun Druckluft aus der Vorratskammer (22, 32) in die Arbeitskammer (16) und aus dieser durch den Arbeitsanschluß (2) in den Verbraucher (1) strömen. Der sich dabei in der Arbeitskammer (16) und im Verbraucher (1) aufbauende Druck wirkt auch auf die Wirkfläche (3) des Abstufungskolbens (30) und erzeugt auf dieser eine Kraft. Diese Kraft drückt die Regelfeder (24) zusammen, wobei sich der Abstufungskolben (30) in die Druckentlastungskammer (29) hineinbewegt. Ist die Zusammendrückung der Regelfeder (24) und damit auch der Weg des Abstufungskolbens so groß wie vorher der Hub des Ventilglieds (21), setzt der Einlaßventilsitz (33) wieder auf das Ventilglied (21) auf und verschließt dadurch wieder das Einlaßventil (21, 33). In der nunmehr erreichten sogenannten "Abschlußstellung" sind sowohl das Auslaßventil (15, 21) als auch das Einlaßventil (21, 33) geschlossen, so daß keinerlei Strömung vom Druckvorrat (20) zu dem Verbraucher (1) stattfinden kann.

Das Rückbetätigen der Anordnung erfolgt durch einen Rückhub des Stößels (14). Der Auslaßventilsitz (15) hebt dabei von dem Ventilglied (21) ab und öffnet das Auslaßventil (15, 21). Druckluft aus der Arbeitskammer (16) und dem Verbraucher (1) kann nun durch den Drukkentlastungskanal (27), die Druckentlastungskammer (29) und den Druckentlastungsausgang (28) in die Atmosphäre abströmen. Infolge des dadurch bedingten Druckabfalls in der Arbeitskammer (16) entspannt sich die Regelfeder (24) und schiebt den Abstufungskolben (30) zurück. War der Rückhub des Stößels (14) nur ein Teilrückhub, so endet die Rückverschiebung des Abstufungskolbens (30), wenn das Ventilglied (21) unter Schließen des Auslaßventils (15, 21) wieder auf den Auslaßventilsitz (15) aufsetzt, wieder in einer Abschlußstellung. War der Rückhub des Stößels (14) ein vollständiger Rückhub, so bleibt das Auslaßventil (15, 21) auch nach dem Rückschieben des Abstufungskolbens (30) in seine Ausgangsstellung offen, so daß eine vollständige Druckentlastung der Arbeitskammer (16) und des Verbrauchers (1) eintritt.

Während der vorstehend beschriebenen Funktionen wird die Kraft des Drucks in der Arbeitskammer (16) auf die Wirkfläche (3) des Abstufungskolbens (30) stets von der Regelfeder (24) aufgenommen. In den Abschlußstellungen halten sich die Kräfte auf die Wirkfläche (3) und der Regelfeder (24) das Gleichgewicht.

Der Stößel (14) muß bei diesen Funktionen lediglich die Kraft der Schließfeder (31) und/oder die etwaige Kraft des Vorratsdrucks auf das Ventilglied (21) überwinden.

Einen Rückhub des Stößels (15) löst der Bediener je nach Ausgestaltung der Anordnung durch eine Rückdrehung oder eine Freigabe des Bedienungsorgans (10) aus. Im Falle der Rückdrehung kann der Stößel (14) bei entsprechender Ausbildung der Winkelverbindungen zwischen dem Stößel (14), dem Übertragungsglied (8) und dem Bedienungsorgan (10) zurückgezogen werden und/oder der Rückdrehung unter dem Einfluß einer Rückstellkraft folgen.

Im Fall der Freigabe des Bedienungsorgans (10) kann die Rückstellkraft auf den Stößel (14) auch die Rückdrehung des Bedienungsorgans (10) bewirken und/oder eine Rückholfeder des Bedienungsorgans (10) unterstützen. Die etwa auf das Bedienungsorgan (10) übertragbare Rückstellkraft des Stößels (14) kann die Kraft einer auf den Stößel (14) wirkenden Rückholfeder und/oder eine Kraft des Drucks in der Arbeitskammer (16) sein. Letztere Kraft kann dadurch erzeugt werden, daß die von der Abdichtung (13) des Stößels (14) in dem Gehäuse (26) eingeschlossene Fläche größer ist als die von dem Auslaßventilsitz (15) eingeschlossene Fläche.

Die Betätigungskraft, die der Bediener während der beschriebenen Funktionen auf das Bedienungsorgan (10) aufbringen muß, hängt außer von dessen etwa vorhandener/n Rückholfeder(n) von den vernachlässigbaren Kräften der Schließfeder (31) und des Vorratsdrucks auf das Ventilglied (21) sowie von der etwaigen Rückstellkraft auf den Stößel (14) ab.

Mit welchen Mitteln auch immer der Rückhub bzw. die Rückdrehung von Stößel (14) und Bedienungsorgan (10) bewirkt wird, die dazu erforderliche Betätigungskraft auf das Bedienungsorgan (10) ist im Vergleich zum Betätigungskraftbedarf der eingangs erwähnten Anordnung nach dem Stand der Technik sehr gering. Deshalb ist die Aussage vertretbar, daß die bisher beschriebene Anordnung praktisch ohne Betätigungskraft rein Betätigungsweg-abhängig betätigbar ist. Deshalb stellt die beschriebene Anordnung nur geringe Ansprüche hinsichtlich ihrer Einbauverhältnisse und eignet sich daher gut für alle Einsatzfälle.

Nun wird aber häufig ein Betätigungskraftbedarf gefordert, beispielsweise beim Einsatz der Anordnung in Fahrzeug-Bremsanlagen. In solchen Fällen kann ein Betätigungskraftbedarf ohne Änderung der Ventileinrichtung (25) durch die Anordnung einer Feder erzeugt werden, die auf das Bedienungsorgan (10) entgegen dessen dem Schließen des Auslaßventils (15, 21) und Öffnen des Einlaßventils (21, 33) zugeordneter Bewegungsrichtung eine Federkraft ausübt. Ein Beispiel für eine solche Feder stellt die bereits erwähnte Feder (11) dar.

Diese Feder (11) ist zwischen dem Lagerteil (5, 6) und dem Bedienungsorgan (10) eingespannt. Die Einspannung am Bedienungsorgan (10) erfolgt über einen Federteller (9), der von der Feder (11) gegen eine Schulter des Übertragungsgliedes (8) gedrückt wird.

Im Ruhezustand der Anordnung, also in der Ruhestellung des Bedienungsorgan (10), drückt die Feder (11) dieses gegen seinen Anschlag an dem Lagerbock (6), wirkt also auch als Rückholfeder. Der zum Betätigen der Anordnung erforderlichen Drehung setzt die Feder (11) eine Federkraft entgegen, welche der Bediener als Betätigungskraft empfindet.

Da sich die Kraftabgabe einer Feder mit bekannten Mitteln auf einfache Weise ändern läßt, bietet dies eine einfache Möglichkeit, den Betätigungskraftbedarf an alle Bedarfsfälle anzupassen.

Die Änderung der Federkraft kann durch Austausch einer vorhandenen Feder (11) gegen eine mit der gewünschten Kraftabgabe vorgenommen werden. Eine andere Möglichkeit ist, die Feder (11) einstellbar zu installieren. Eine solche Variante ist in der Fig. angedeutet. Das Lagerteil (5, 6) weist um den Durchtritt des Übertragungsgliedes (8) herum einen Gewindestutzen (4) auf. Auf diesem ist ein Federteller (12) mit Innengewinde durch Drehen längsverschiebbar. Durch die Längsverschiebbarkeit dieses Federtellers (12) ist die Vorspannung der Feder (11) und damit ihre Kraftabgabe einstellbar.

Weitere Möglichkeiten zur Anpassung der Anordnung an verschiedene Einsatzfälle bietet die Feder (11) durch die Wahl bzw. die Änderung ihrer Kraft/Weg-Kennlinie. Durch entsprechende konstruktive Auslegung der Feder (11) kann diese eine lineare oder nicht-lineare Kraft/Weg-Kennlinie aufweisen mit entsprechendem Verlauf der Betätigungskraft auf das Bedienungsorgan (10). Häufig wird ein progressiver Verlauf der Betätigungskraft gefordert. Ein solcher ist beispielsweise durch eine progressive Kraft/Weg-Kennlinie der Feder (11) erzielbar oder (wenn die Regelfeder (24) bereits eine progressive Kennlinie aufweist) unterstützbar.

Die als Schrauben-Druckfeder dargestellte Feder (11) kann auch völlig anders gestaltet sein, beispielsweise als Elastomerfeder ähnlich den Regelfedern in den bereits erwähnten WABCO Westinghouse-Druckschriften.

Die Feder (11) kann auch durch eine oder mehrere anders angeordnete Federn, z. B. neben dem Übertragungsglied (8) und/oder dem Bedienungsorgan (10), aber auch z. B. in Zugfeder-Anordnung, unterstützt oder ersetzt werden.

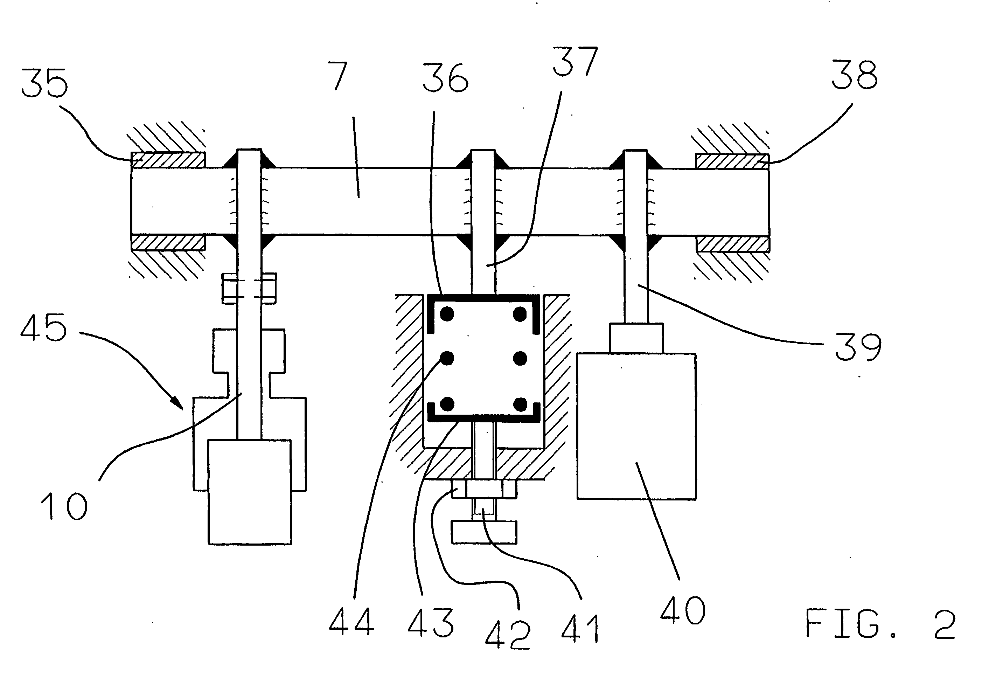

Fig. 2 zeigt aus der Blickrichtung des Bedieners eine andere erfindungsgemäße Anordnung.

Die Ventileinrichtung (45) kann hier beispielsweise eine solche mit Umlenkhebel sein, wie sie in der bereits erwähnten WABCO Westinghouse-Druckschrift "Motorwagen-Bremsventil 461 295" beschrieben ist.

Das Bedienungsorgan (10) dient in dieser Anordnung zur gleichzeitigen Betätigung einer anderen Einrichtung (40), die in diesem Fall ein elektrischer Bremswertgeber einer elektrisch gesteuerten Fahrzeug-Bremsanlage sein soll. Ein solcher Bremswertgeber ist beispielsweise in der US 4 818 036 beschrieben.

Zur Betätigung der anderen Einrichtung (40) ist an der Lagerwelle (7) ein Nocken (39) angeordnet und mit der Lagerwelle (7) fest verbunden.

Je nach Einsatzfall kann die anderen Einrichtung (40) anders sein, und es können auch mehrere andere Einrichtungen vorgesehen sein, für die die Lagerwelle (7) entsprechende Nocken aufweisen muß. Das bedeutet nicht, daß die Lagerwelle (7) für jede andere Einrichtung einen eigenen Nocken aufweisen muß. Vielmehr ist auch vorstellbar, daß die Einrichtungen winklig zueinander angeordnet sind und der Nocken, auf seinem Umfang verteilt, für jede dieser Einrichtungen eine eigene Nokkenkontur aufweist.

Mit (35) und (38) sind noch die Drehlager der Lagerwelle (7) dargestellt.

Für den Fall, daß auch diese Anordnung eine Betätigungskraft erfordern soll, kann diese beispielsweise durch eine Federanordnung, wie dargestellt, erzielt werden. Die Federanordnung befindet sich hier neben dem Bedienungsorgan (10). Sie enthält eine Feder (44). Auf diese Feder (44) wirkt die mit dem Bedienungsorgan (10) fest verbundene Lagerwelle (7) unter Zwischenschaltung eines Tassenstößels (36) über einen weiteren Nocken (37) ein. Die Feder (44) ist über einen Federteller (43) und eine Einstellschraube (41) mit Sicherungsmutter (42) einstellbar.

Im übrigen gelten für die eine Fig. die für die andere Fig. gemachten Ausführungen in direkter oder entsprechender Anwendung, soweit sich aus den vorstehenden Ausführungen nichts Widersprechendes ergibt.

## Patentansprüche

1. Anordnung mit einer Ventileinrichtung (25) und einem Bedienungsorgan (10), worin
a) die Ventileinrichtung (25)
aa) eine mit einem Druckvorrat (20) verbundene Vorratskammer (22, 32), eine mit wenigstens einem Druckverbraucher (1) verbundene Arbeitskammer (16) sowie einen Druckentlastungsausgang (28),
ab) ein verschiebbares Ventilglied (21), welches mit einem Einlaßventilsitz (33) ein Einlaßventil (21, 33) und mit einem Auslaßventilsitz (15) ein Auslaßventil (15, 21) bildet, wobei das Einlaßventil (21, 33) die Verbindung zwischen der Vorratskammer (22, 32) und der Arbeitskammer (16) und das Auslaßventil (15, 21) die Verbindung zwischen der Arbeitskammer (16) und dem Druckentlastungsausgang (28) beherrschen,
ac) einen die Verschiebung des Ventilglieds (21) kontrollierenden Stößel (14),
ad) einen Abstufungskolben (30), der einerseits mit der Kraft einer Regelfeder (24) und andererseits mit dem Druck in der Arbeitskammer (16) beaufschlagt ist, aufweist und
b) der Stößel (14) von dem Bedienungsorgan (10) wenigstens in Schließrichtung des Auslaßventils (15, 21) und in Öffnungsrichtung des Einlaßventils (21, 33) bewegbar ist,
c) die Regelfeder (24) zwischen dem Abstufungskolben (30) und dem Ventilgehäuse (26) gefangen ist,
d) der Auslaßventilsitz (15) an dem Stößel (14) angeordnet ist,
e) der Einlaßventilsitz (33) an dem Abstufungskolben (30) angeordnet ist
f) wenigstens eine Feder (11, 44), die auf das Bedienungsorgan (10) entgegen dessen dem Schließen des Auslaßventils (15, 21) und Öffnen des Einlaßventils (21, 33) zugeordneter Bewegungsrichtung eine Federkraft ausübt,
**dadurch gekennzeichnet, daß** die Feder (11, 44) außerhalb des Gehäuses (26) der Ventileinrichtung (25) angeordnet ist.

2. Anordnung nach Anspruch 1,
**dadurch gekennzeichnet, daß**
a) der Abstufungskolben (30) hohl ist und einen dem Druckentlastungsausgang (28) zugewandten Durchbruch aufweist,
b) das Ventilglied (21) abgedichtet in dem Abstufungskolben (30) verschiebbar geführt ist und einen innerhalb des Einlaßventilsitzes (33) des Abstufungskolbens (30) und des Auslaßventilsitzes (15) des Stößels (14) mündenden Durchbruch (Druckentlastungskanal 27) aufweist.

3. Anordnung nach Anspruch 2,
**dadurch gekennzeichnet,**
**daß** in dem Hohlraum des Abstufungskolbens (30) wenigstens ein Teil (zweite Teil-Vorratskammer 32) der Vorratskammer (22, 32) untergebracht ist.

4. Anordnung nach einem der vorherigen Ansprüche,
**dadurch gekennzeichnet,**
**daß** das Bedienungsorgan (10) zur gleichzeitigen Betätigung wenigstens einer anderen Einrichtung (40) dient.

5. Anordnung nach Anspruch 4, die in einem Fahrzeug zur Bremsbetätigung dient,
**dadurch gekennzeichnet,**
**daß** eine andere Einrichtung (40) ein elektrischer Bremswertgeber ist.

6. Anordnung nach einem der vorherigen Ansprüche,
**dadurch gekennzeichnet,**
**daß** die Feder (11; 44) eine nichtlineare Kraft/Weg-Kennlinie aufweist.

7. Anordnung nach Anspruch 6,
**dadurch gekennzeichnet,**
**daß** die Kraft/Weg-Kennlinie der Feder (11; 44) progressiv verläuft.

8. Anordnung nach einem der vorherigen Ansprüche
**dadurch gekennzeichnet,**
**daß** die Federkraft und/oder die Kraft/Wegkennlinie der Feder (11; 44) einstellbar sind.

## Claims

1. Arrangement comprising a valve device (25) and an operating member (10) wherein
a) the valve device (25) has
aa) a supply chamber (22, 32) connected to a pressure supply (20), a working chamber (16) connected to at least one pressure load (1) and a pressure release outlet (28),
ab) a displaceable valve member (21) that together with an inlet valve seat (33) forms an inlet valve (21, 33) and together with an outlet valve seat (15) forms an outlet valve (15, 21), the inlet valve (21, 33) governing the connection between the supply chamber (22, 32) and the working chamber (16) and the outlet valve (15, 21) governing the connection between the working chamber (16) and the pressure release outlet (28),
ac) a tappet (14) that controls the displacement of the valve member (21),
ad) a graduating piston (30) that is acted upon on one side by the force of a control spring (24) and on the other side by the pressure in the working chamber (16), and
b) the tappet (14) is movable by the operating member (10) at least in the closing direction of the outlet valve (15, 21) and in the opening direction of the inlet valve (21, 33),
c) the control spring (24) is held captive between the graduating piston (30) and the valve housing (26),
d) the outlet valve seat (15) is arranged on the tappet (14),
e) the inlet valve seat (33) is arranged on the graduating piston (30),
f) at least one spring (11, 44) exerts a spring force upon the operating member (10) counter to the direction of movement of the operating member, which movement is associated with the closing of the outlet valve (15, 21) and the opening of the inlet valve (21, 33),
**characterised in that** the spring (11, 44) is arranged outside the housing (26) of the valve device (25).

2. Arrangement according to claim 1,
**characterised in that**
a) the graduating piston (30) is hollow and has an opening facing the pressure release outlet (28),
b) the valve member (21) is guided displaceably in sealed manner inside the graduating piston (30) and has a passage (pressure release channel 27) that opens out inside the inlet valve seat (33) of the graduating piston (30) and inside the outlet valve seat (15) of the tappet (14).

3. Arrangement according to claim 2,
**characterised in that**
at least one part of the supply chamber (22, 32) (second part 32 of the supply chamber) is housed in the hollow region of the graduating piston (30).

4. Arrangement according to any one of the preceding claims,
**characterised in that**
the operating member (10) serves the simultaneous actuation of at least one other device (40).

5. Arrangement according to claim 4 for use in brake actuation in a vehicle,
**characterised in that**
a different device (40) is an electrical brake signal transmitter.

6. Arrangement according to any one of the preceding claims,
**characterised in that**
the spring (11; 44) has a non-linear force/path characteristic.

7. Arrangement according to claim 6,
**characterised in that**
the force/path characteristic of the spring (11; 44) is progressive.

8. Arrangement according to any one of the preceding claims,
**characterised in that**
the spring force and/or the force/path characteristic of the spring (11; 44) can be adjusted.

## Revendications

1. Aménagement comprenant un système de valve ou de soupape (25) et un organe de manoeuvre (10), dans lequel
a) le système de soupape (25) comprend
aa) une chambre de réserve (22, 32) reliée à un réservoir de pression (20), une chambre de travail (16) reliée à au moins un récepteur ou consommateur de pression (1), ainsi qu'une sortie de décharge de pression (28),
ab) un organe de soupape (21) coulissant, qui forme avec un siège de soupape d'entrée (33), une soupape d'entrée (21, 33), et avec un siège de soupape de sortie (15), une soupape de sortie (15, 21), la soupape d'entrée (21, 33) commandant la liaison entre la chambre de réserve (22, 32) et la chambre de travail (16), et la soupape de sortie (15, 21) commandant la liaison entre la chambre de travail (16) et la sortie de décharge de pression (28),
ac) un poussoir (14) commandant le coulissement de l'organe de soupape (21),
ad) un piston d'étagement (30), qui d'une part est sollicité par la force d'un ressort de réglage (24) et d'autre part par la pression dans la chambre de travail (16), et
b) le poussoir (14) peut être déplacé par l'organe de manoeuvre (10), au moins dans la direction de fermeture de la soupape de sortie (15, 21), et dans la direction d'ouverture de la soupape d'entrée (21, 33),
c) le ressort de réglage (24) est enserré entre le piston d'étagement (30) et le carter de soupape (26),
d) le siège de soupape de sortie (15) est disposé sur le poussoir (14),
e) le siège de soupape d'entrée (33) est disposé sur le piston d'étagement (30),
f) au moins un ressort (11, 44) exerce une force de ressort sur l'organe de manoeuvre (10), à l'encontre de la direction de mouvement assignée à la fermeture de la soupape de sortie (15, 21) et à l'ouverture de la soupape d'entrée (21, 33),
**caractérisé en ce que** le ressort (11, 44) est disposé à l'extérieur du carter (26) du système de soupape (25).

2. Aménagement selon la revendication 1, **caractérisé en ce que**
a) le piston d'étagement (30) est creux et présente un passage dirigé vers la sortie de décharge de pression (28),
b) l'organe de soupape (21) est guidé de manière coulissante et étanche dans le piston d'étagement (30) et présente un passage (canal de décharge de pression 27) débouchant à l'intérieur du siège de soupape d'entrée (33) du piston d'étagement (30) et du siège de soupape de sortie (15) du poussoir (14).

3. Aménagement selon la revendication 2, **caractérisé en ce que** dans l'espace creux du piston d'étagement (30), est logée au moins une partie (deuxième chambre de réserve partielle 32) de la chambre de réserve (22, 32).

4. Aménagement selon l'une des revendications précédentes, **caractérisé en ce que** l'organe de manoeuvre (10) sert à l'actionnement simultané d'au moins un autre dispositif (40).

5. Aménagement selon la revendication 4, qui, dans un véhicule, sert à l'actionnement du freinage, **caractérisé en ce qu'**un autre dispositif (40) est un générateur de valeur de freinage électrique.

6. Aménagement selon l'une des revendications précédentes, **caractérisé en ce que** le ressort (11, 44) présente une courbe caractéristique force/déplacement non linéaire.

7. Aménagement selon la revendication 6, **caractérisé en ce que** la courbe caractéristique force/déplacement du ressort (11, 14) est d'une allure progressive.

8. Aménagement selon l'une des revendications précédentes, **caractérisé en ce que** la force de ressort et/ou la courbe caractéristique force/déplacement du ressort (11, 14) sont réglables.
